Europäisches Patentamt

European Patent Office

Office européen des brevets

(19)

(11) Publication number: 0 392 072
A1

# (12) EUROPEAN PATENT APPLICATION

(21) Application number: 89114732.4

(22) Date of filing: 09.08.89

(51) Int. Cl.5: G05D 7/00

(30) Priority: 13.04.89 US 337330

(43) Date of publication of application:
17.10.90 Bulletin 90/42

(84) Designated Contracting States:
AT BE CH DE ES FR GB IT LI LU NL SE

(71) Applicant: UNIT INSTRUMENTS, INC.
1247 West Grove Avenue
Orange California 92665(US)

(72) Inventor: Doyle, Michael J.
10001 Platanal Drive
Villa Park California 92667(US)

(74) Representative: Howden, Christopher Andrew
et al
FORRESTER & BOEHMERT
Widenmayerstrasse 4/I
D-8000 München 22(DE)

(54) Fluid mass flow control system.

(57) A fluid mass flow control system in which the flow controller valve can be located in a separate subassembly. The stroke of the valve and its centering on the valve seat are adjusted and tested in the subassembly prior to assembly of the controller. The subassembly is easily modified to operate in either a normally open or normally closed state. Fluid joint sealing in the valve subassembly, in the controller assembly, and in the assembly of the controller to other modular in-line components of the system take the form of face or bead seals. Elongated fasteners extending between the assembled components are operative to fasten the components together and develop sealing pressures at the face or bead seals. A modular filter component is disclosed enabling lateral removal and replacement of the filter without affecting the associated string of in-line, modular components.

Fig. 1.

## BACKGROUND OF THE INVENTION

Field of the Invention:

The present invention relates to a fluid mass flow control system and its constituent parts.

## DESCRIPTION OF THE PRIOR ART

Fluid mass flow control systems are employed to regulate the mass flow rate of fluids or fluidic mixtures. For example, in processes for manufacturing semiconductor substrates or integrated circuits a number of process stages or steps are involved which each require exact quantities of different kinds of fluid including gases. The flow controller valve of such systems must meter fluid flows precisely and in a positive, leakproof manner throughout many repetitions of operation and throughout a range of operating pressures. To accomplish this the controller valve must be exactly fitted to the valve seat. Heretofore this was done at the factory during initial fabrication of the valve assembly. Any misalignment in the fixed relationship of the assembled valve assembly meant that the complete assembly had to be replaced, or disassembled and reworked to correct the misalignment.

The factory established fixed relationship of the valve and valve seat components also fixed the length of the valve stroke. If a different length of stroke later became desirable, this could only be adjusted by replacing the complete valve assembly.

Also, in a typical prior art controller valve the components are disposed or oriented for operation in a normally closed state. The components are not readily adapted for rearrangement to operate in a normally open state, and normally open operation could only be provided by substituting a different valve assembly. It would be desirable to have the valve readily convertible to either normally open or normally closed operation.

In certain integrated circuit and other analytical industrial manufacturing processes gas flow takes place at relatively high pressures. Elastomeric O-ring seals are generally inadequate to provide sealing at higher pressures since they are susceptible to leakage above approximately 1,500 pounds per square inch. Satisfactory sealing can be achieved at such pressures, and up to approximately 10,000 pounds per square inch, by using O-rings made of stainless steel or the like. However, many such O-rings are prohibitively expensive and not readily available. Mass flow control systems are in particular need of a reliable low cost means to provide sealing against gas loss at higher pressures and leakage at high vacuums.

Existing methods for the usual in-line or longitudinal assembly of modular components of a flow control system are also unsatisfactory. Typically, a modular component will include a threaded opening and an adjacent O-ring. A coupler having a central nut portion and opposite threaded ends will be threaded at one end into the threaded opening of the modular component. The nut portion is tightened to compress the O-ring and provide a seal. A similar arrangement is provided on the adjacent modular component. The external threaded ends of the two couplers are then secured together by a length of conduit having a gland integral with each end of the conduit. A pair of internally threaded nuts carried between the opposite ends of the conduit are then threaded over the threaded ends of the two couplers. Tightening of the nuts engages the glands and pulls the conduit against O-rings interposed between the ends of the couplers and the ends of the conduit. The connection of the two modular components thus requires two couplers, an intervening conduit, a pair of nuts to connect the conduit and the pair of couplers, and four O-rings. Aside from the undesirable multiplicity of fittings, the length of the assembly, that is, the space it occupies, is very undesirable. A flow control system is normally situated in a "clean" room from which foreign particles are constantly filtered, and making a clean room large enough to accommodate lengthy assemblies is very expensive.

The arrangement of filters in prior art flow control systems is another problem. Contamination of process gases by particulate matter and the like is typically prevented by the use of filters. These must be periodically cleaned or replaced. Since the filter assembly is usually one of the in-line modular components of the parent system, its removal requires unbolting of the assembly at its flanged connections. The filter is then longitudinally separated from the assembly for cleaning or replacement. A better system is needed for servicing or replacing such filters, as well as analogous components, without having to disturb the parent assembly of other flow control system components.

It will be apparent from the foregoing that there is a need for a fluid mass flow control system that addresses each of the foregoing problems of prior art structure.

## SUMMARY OF THE INVENTION

According to the present invention, a fluid mass flow control system is provided which is adapted to precisely control gas flow over a wide range of pressures, and particularly at higher pressures and at ultra high vacuums.

The system is characterized by a valve which in one embodiment is supported in the valve assembly by a disk member. On initial assembly the disk is loosely carried at its edges, being movable laterally in a plane normal to the axis of valve movement. The end or seating portion of the valve is rounded or otherwise configured so that it centers itself in the orifice of the valve seat during factory assembly. This arrangement self-corrects for any misalignment between the valve and the valve seat. The aligned relationship is then fixed on final assembly of the valve components so that the components cannot shift relative to one another during operation of the valve.

The valve seat is also threadably carried by or circularly press fit into the valve subassembly so that it can be adjustably moved along the valve stroke axis, and then fixed in place. This allows the length of valve stroke to be adjusted within predetermined limits. During manufacturing the separate, functional valve subassembly can be stored for future attachment to the system or product at the time of use. Only minor disassembly of the valve subassembly is then required in the field to gain access to the valve seat to readjust its location and thereby adjust the valve stroke length.

A bias means is associated with the controller valve to normally bias it toward a closed position. This normally closed operation can be changed to a normally open operation by disassembling the valve components, substituting slightly different components, and reinserting the bias means so that it urges the valve toward a normally open position. This orientation is quickly accomplished and is desirable in some applications.

The present flow control system also embodies a sealing means or bead seal enabling operation of the system at pressures as high as 10,000 pounds per square inch or at least as low as $1 \times 10-11$ torr. with gas leakage as low as $2.4 \times 10-14$ cc/He/sec. The bead seals are employed in various parts of the system, particularly between certain of the modular components to facilitate in-line or longitudinally oriented assembly of the components. Use of such bead seals enables all of the components to be connected together by a single set of fastener means that extend completely through the components and connect to opposite end or mounting plates, or by multiple fasteners extending inwardly from each other. This eliminates the objectionable multiple fitting and seal type connections of the prior art.

Each bead seal comprises an annular projection or rib integral with or carried by an end face of each modular component. It surrounds the gas flow opening in the end face and defines a rounded or radiused sealing surface. The bead seal further includes an annular sealing washer or gasket made of metal, "Kel-F", rubber or the like disposed between the end faces of the abutting modular components. When the components are brought together the annular ribs press against the opposite faces of the gasket to provide the desired high pressure or high vacuum seal.

A pair of end mounts or plates are placed adjacent the end ones of the modular components to be assembled. Elongated, longitudinally continuous headed bolts are disposed through the end plates and through the components. The bolt heads bear against the outer portion of one end plate, and the opposite bolt ends are fixed in place by threaded fasteners or nuts tightened onto them and bearing against the associated end plate. This arrangement brings the sealing surfaces of all of the ribs into sealing engagement with the associated gaskets. The resulting assembly is much shorter and less bulky than the analogous assemblies of the prior art.

The present flow control system also includes a filter assembly which has a base assembled to the adjacent modular components in the same in-line arrangement as the other components. However, the gas flow passages through the base are laterally offset to communicate with a transversely oriented filter cavity defined by a filter cap and a portion of the filter base. This disposes the filter at right angles to the longitudinal axis of the filter base. Removal of the filter cap then provides access to the filter so that its replacement involves only lateral slidable separation from the filter cavity, without any need for demounting of the complete filter assembly from the other modular system components.

Other aspects and advantages of the present invention will become apparent from the following more detailed description taken in conjunction with the accompanying drawings.

## BRIEF DESCRIPTION OF THE DRAWINGS

FIG. 1 is a longitudinal cross sectional view of a flow controller associated with a fluid mass flow control system according to the present invention, the valve assembly being illustrated in a normally closed condition;

FIG. 2 is an enlarged detail view of the valve assembly of FIG. 1;

FIG. 3 is a view similar to FIG. 2, but illustrating the valve assembly assembled for operation in a normally open condition;

FIG. 4 is a longitudinal cross sectional view, partially in side elevation, illustrating the flow controller of FIG. 1 in combination with a filter and shutoff valve assembly;

FIG. 5 is a partial perspective view of one of the end plates and an associated modular component, illustrating the details of the bead seal; and

FIG. 6 is a side elevational view of a plurality of modular components connected in in-line relationship by a single or multiple set of elongated fasteners.

## DESCRIPTION OF THE PREFERRED EMBODIMENT

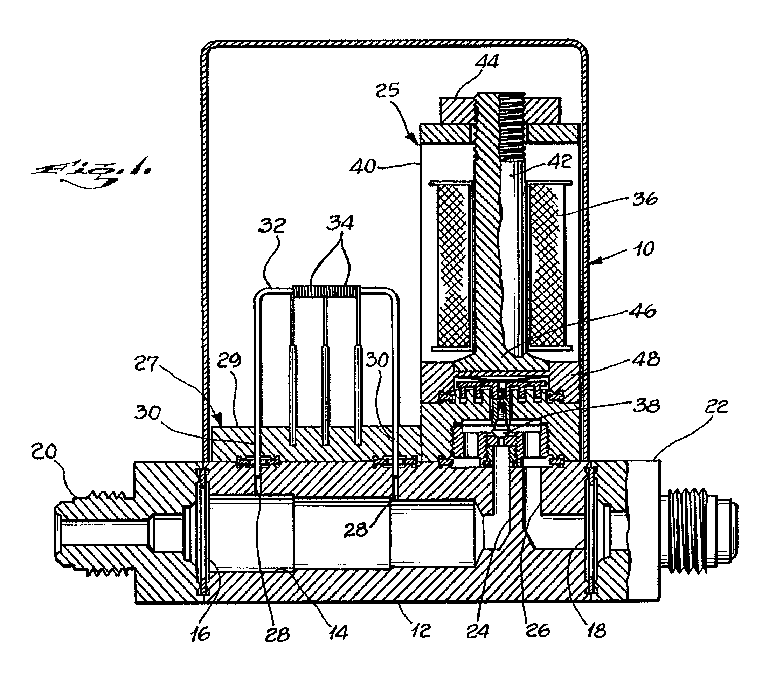

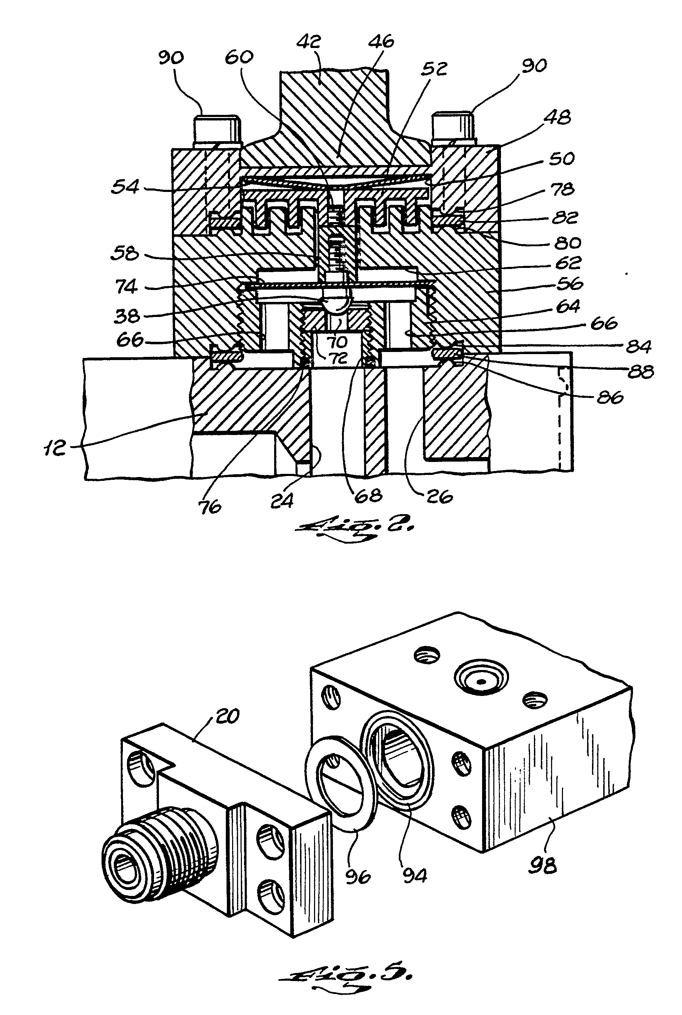

Referring now to the drawings, and particularly FIGS. 1 and 2, the present fluid mass control flow system comprises a mass flow controller 10 having a gas passage defining means in the form of a ported gas block 12 which includes an axially or longitudinally oriented gas passage 14 having an upstream or inlet port 16 and a downstream or outlet port 18.

End mounts or end plates 20 and 22 are connected to the opposite ends of the gas block 12, respectively, and include appropriate threaded fittings for attachment of suitable conduits (not shown) for feeding gas to the upstream end of the block 12, and carrying it away from the downstream end to the process site (not shown), as will be apparent to those skilled in the art.

The connection of the end plates 20 and 22 to the gas block 12 is fluid tight by reason of utilization of novel face seals such as bead seals, elastomeric or plastic O-rings or the like, as will subsequently be described.

The main conduit 14 includes lateral branches or passageways 24 and 26 which in this embodiment are laterally oriented. The present invention also comprehends so-called in line mass flow control systems in which the gas passages are longitudinally or axially arranged.

The passageways 24 and 26 define, respectively, an inlet conduit to a valve assembly 25 of the flow controller 10, and an outlet passage from the valve assembly to the outlet port 18. As will be seen, the valve assembly is operative to control the quantity of gas flowing in either direction through the main conduit 14. Use of the terms "inlet" and "outlet" is merely exemplary and not intended to be limiting. As will also be seen, the connection of the valve assembly 25 to the gas block 12 is fluid tight by reason of utilization of the same type of face seals used in assembling the in-line modular components.

Operation of the valve assembly 25 is controlled by a control signal means 27 comprising a sensor conduit defined by a pair of laterally directed passages 28 in the gas block 12, a pair of aligned, laterally directed passages 30 in a sensor base or mount 29 of the signal means 27, and a U-shape sensor tube 32 carried by the mount 29 and communicating with the passages 30. As will be seen, the control signal means 27 is connected to the gas block 12 in fluid tight relation by the same type of face seals previously referred to. Further, as previously indicated, the present invention can be used in association with an in-line sensor system in which the sensor is aligned with the main gas flow, rather than being positioned laterally of the main gas flow.

The sensor tube 32 is the sensing passage through the control signal means. A heating coil 34 is disposed about the sensor tube 32 to heat gas flowing through the tube. Sensing coils 34 associated with the heating coil sense the upstream and downstream temperatures of the heated gas.

As is well known, the gas that flows through the sensor tube 32 absorbs heat produced by the heating coil 34, and the difference in temperatures at particular locations along the sensor tube is indicative of the mass flow rate in the sensor tube, and consequently in the main conduit 14.

The sensed rate of mass flow through the bypass conduit is converted by a suitable control means (not shown) common in the art to a signal which operates the flow controller valve assembly 25 in accordance with the rate of mass flow. The particular details of the sensing and control circuits are omitted because they do not form any part of the present invention, and various such circuits are well known to those skilled in the art.

The flow controller valve assembly includes an electromagnet or solenoid, preferably but not necessarily of the type described and illustrated in my U. S. Patent No. 4,569,504, issued February 11, 1986. The solenoid is responsive to signals from the control system to move a valve element or pintle 38 of the valve assembly. To accomplish this a solenoid coil 36 is carried by a housing or frame 40 constituting the magnetic return path. The frame 40 supports the solenoid coil in surrounding relation to a magnetic shaft or core 42.

The core 42 is vertically elongated and is characterized by a threaded upper extremity which extends through an upper wall of the valve assembly frame 40. A fastening nut 44 secures the core 42 in position relative to the valve housing upper wall. The lower end of the core 42 is characterized by a larger diameter base 46 which rests within a complemental annular cavity formed in a pole retainer 48. A thin horizontal wall section of the retainer 48 separates the core base 46 from a pole piece cavity 50 which, as best seen in FIG. 2, receives an upper pole piece or plunger 52. Plunger 52 is vertically movable within the pole piece cavity without any contact with the walls of the cavity. This non contact or frictionless arrangement is important because it avoids the generation of abraded particles or the like which could be undesirably carried into the gas flow passages. Any friction also causes unpredictable flow deviations making it difficult for the PID circuitry to maintain steady state flow.

A bent or centrally deformed disk spring 54 is disposed between the upper surface of the plunger 52 and the undersurface of the adjacent horizontal wall of the pole retainer 48. The disk spring 54 exerts a bias which urges the plunger 52 downwardly. Its equally important function is to bear at its center against the central portion of the plunger 52, with its margins bearing against the adjacent walls of the pole retainer 48. This centers or axially aligns the central portion of the plunger 52 with the center line of the pintle 38 so that the plunger does not contact the adjacent walls of the pole retainer 48.

The plunger 52 is characterized by a plurality of depending portions which extend into complemental, upwardly opening recesses in a bottom pole piece 56. The centering action of the spring 54 upon the plunger 52 not only spaces the plunger 52 out of contact with the adjacent walls of the pole retainer 48, but it also spaces the depending portions of the plunger 52 from the adjacent walls of the complemental recesses in the bottom pole piece 56. As previously indicated, this is important to minimize the generation of unwanted particulate matter.

The pintle 38 is characterized by a threaded, upwardly extending shank which is threaded, press-fitted or otherwise suitably secured within a recess provided in a vertically oriented shaft 58. The shaft 58 includes an integral portion 60 which is threaded or force fitted within a central opening in the central portion of the plunger 52. This causes the pintle 38, shaft 58, and plunger 52 to move in unison.

The bottom pole piece 56 includes a downwardly opening recess 62 having sidewalls which receive a valve seat holder or keeper 64. The recess 62 is in fluid communication with the outlet conduit 26 by means of one or more of a plurality of gas passages 66 provided in the valve seat keeper 64.

Fluid communication between the inlet conduit 24 and the recess 62 is provided by a central passage through a lock nut 68 and a valve seat passage 70 in a valve seat 72.

The upper portion of the valve seat passage 70 is normally closed by the hemispherically, mushroom, or taper shaped lower end of the pintle 38, as best seen in FIG. 2. The valve seat is externally threaded for threaded receipt within a threaded, vertically oriented central opening in the valve seat keeper 64. It could, if desired, be unthreaded and press-fitted into position, or provided with a one-way keeper or wedging element (not shown). On initial assembly of the valve assembly 25, the valve seat 72 is adjusted upwardly sufficiently to establish the desired length of valve stroke, the more upwardly disposed the valve seat, the shorter the valve stroke, as will be apparent. If the valve seat is made of plastic and slightly oversize, it will remain in place during operation. This provides an easy means for adjusting the valve stroke on assembly to suit the needs of any particular application.

When the valve seat 72 is properly located to provide the desired valve stroke length, the hemispherical configuration of the pintle 38 automatically centers the pintle 38 within the valve seat passage 70. This centered position is then fixed by a threading, press fitting or like operation to place the valve seat keeper 64 upwardly so that the upper wall of the keeper 64 engages the edge margin of a flat disk spring 74. The spring 74 is fixedly carried by the pintle 38 and bears against the underside of an annular portion of the bottom pole piece 56 which is formed by reason of the difference in diameters between the recess 62 and the opening within which the valve seat keeper is received.

On initial assembly, the keeper 64 will be out of or in light contact with the spring 74 so that the spring 74 can move laterally to accommodate the centering action of the pintle 38 within the valve seat passage 70. Once the pintle is properly centered, the upward adjustment of the keeper 64 brings it into forcible engagement with the edge margins of the spring 74. This retains the spring 74 in position and preserves the centered relationship between the pintle 38 and the valve seat 72. Recentering of an out of alignment pintle 38 is accomplished by simply unthreading or backing off the seat 72 and keeper 64 sufficiently, then retightening seat 72 and keeper 64 to allow the pintle to recenter itself.

The function of the lock nut 68 is to bear against the underside of the valve seat 72 and fix it in position once the proper valve stroke has been established. A suitable sealing means in the form of an elastomeric plastic or metal O-ring 76 is disposed between the lock nut 68 and the adjacent portion of the keeper 64 to prevent gas leakage between conduits 24 and 26.

The foregoing arrangement is relatively free from the generation of particulate matter during the operation of the valve because all of the components are out of rubbing or abrading contact except for the pintle 38 on its seat 72.

The pole retainer 48 adjacent the cavity 50 includes an annular increased diameter portion having an upper wall. The wall is characterized by a circumferentially continuous protuberance or annular rib 78. The adjacent upper surface of the bottom pole piece 56 includes an identical complemental rib 80 in confronting relation. Between the ribs is located an annular, relatively incompressible disk or washer 82, the combination of the ribs 78 and 80 and the washer 82 constituting a form of face seal sometimes referred to herein as a "bead seal". This seals the cavity 50 from atmosphere. As will be seen, such bead seals are provided at various connection joints in the mass flow control system illustrated in order to provide tight gas seals at relatively high pressures or high vacuums. Other forms of face seals could be utilized if desired, such as O-rings or the like made of elastomeric material or metal, depending upon cost considerations and the particular pressures and other conditions which are anticipated.

A similar bead seal is provided between the bottom pole piece 56 and the gas block 12 to seal off the recess 62 from atmosphere. The bead seal includes a downwardly directed rib 84 integral with the bottom pole piece 56, and an upwardly directed rib 86 integral with an upwardly directed surface of a recess formed in the gas block 12, as best seen in FIG. 2. The seal also includes a gasket or washer 82 interposed between the ribs 84 and 86.

A plurality of headed fastening means or bolts 90 are disposed through suitable vertically oriented openings provided in the pole retainer 38 and in the bottom pole piece 56. These openings are in communication with threaded openings (not shown) provided in the gas block 12 to receive the threaded ends of the bolts 90. Tightening the bolts 90 assembles the pole retainer 48 to the bottom pole piece 56, and also assembles these components to the gas block 12, as will be apparent.

Tightening of the bolts 90 also establishes a gas tight seal by reason of the close engagement of the ribs 78 and 80 with the opposite faces of the washer 82, and the similar engagement of the ribs 84 and 86 with the opposite faces of the washer 88.

The ribs are precisely formed so as to be in exact confronting, complemental relation, and the radius of each rib is made sufficiently small to enable high contact pressures to be developed with the washer. The contact is a circumferentially continuous engagement with the interposed washer element so that only a very slight deformation of the washer 82 is necessary to provide the desired fluid tight seal. The arrangement has operated very satisfactorily, providing a gas tight seal at pressures as high as 10,000 pounds per square inch, or as low as 1 x 10-11 torr., using helium as the test gas. Use of the zero clearance face or bead seal in fluid flow mass flow control system is particularly advantageous in that there is no need to provide interior threads, flange connections and the like, thereby eliminating particle generation and nucleation corrosion sites and also eliminating up to half of the seals necessary in the conventional form of assembly.

Although nickel is a preferred material for the washer of the bead seal, other materials can be used depending upon the pressures and gases involved. The washer has to be resistant to corrosive gases in some applications. The preferred nickel washer is provided with a very close tolerance flat surface to enable precision contact with the bead seal ribs, and care must be exercised to remove all machining or fabrication particles from the washer prior to its assembly to eliminate particulate matter from the gas flow passages. A preferred technique is to coin the washers to assure a precision fit, and then to apply a plastic coating to the washers to protect them from scratches. The coating is stripped away just prior to use.

The combined action of the disk springs 54 and 74 urges the pintle 38 downwardly to a normally closed position.

Operation of the pintle is initiated by a control system (not shown) which processes signals received from the control signal means 27 to operate the solenoid 36 accordingly. Assuming that the signal generated by the control signal means 27 calls for greater gas flow from the outlet port 18, the solenoid 36 is energized and this urges the upper pole piece or plunger 52 upwardly against the bias of the spring 54. Since the plunger 52 is unitary with the pintle 38, the pintle moves upwardly and away from its valve seat 72. The greater the energization of the solenoid 36, the greater the upward movement of the pintle 38, and the greater the rate of gas flow past the pintle and out of the outlet conduit 26.

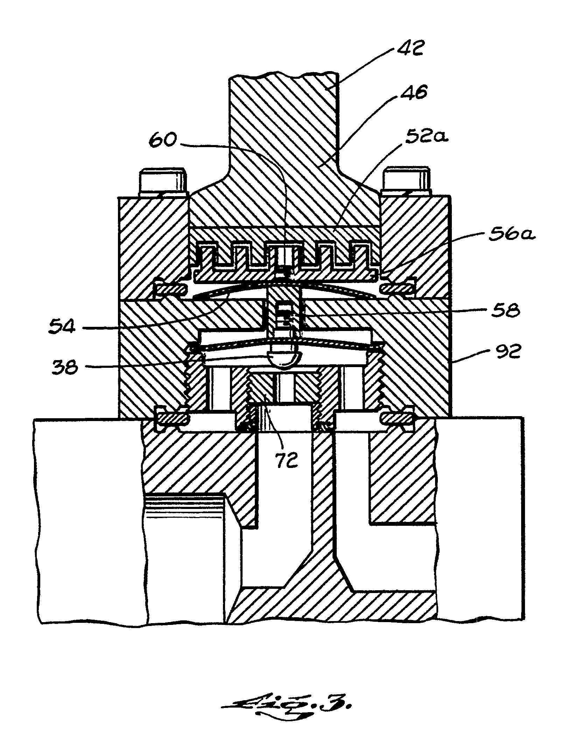

The present valve assembly is uniquely adapted for relatively simple refabrication so as to operate in the normally open position illustrated in FIG. 3. The components of the embodiment of FIG. 3 which are similar to those of the normally closed embodiment of FIG. 2 have been assigned like reference numerals. Where the components perform a similar function, but are different in structure, they have been assigned like reference numerals, but with the suffix "a".

In the embodiment of FIG. 3 52a denotes a solenoid top pole which is fixed to the underside of the base 46 of the solenoid core 42 and to the adjacent pole retainer 48a. In addition, 56a designates the plunger in the embodiment of FIG. 3.

The movable plunger 56a moves in unison with the portion 60, a spring 54, the shaft 58 and the pintle 38. The spring 54 is oppositely oriented, compared to the embodiment of FIG. 2, and it is located between the plunger 56a and a bottom pole 92a. It is centrally apertured to closely receive the portion 60, and its edge margins engage the adjacent upper surface of the bottom pole 92a, tending to center the pintle 38 relative to the valve seat 72. The location of the spring 54 and its orientation causes it to normally bias the pintle 38 toward an upper, normally open position.

In operation, energization of the solenoid causes the plunger 56a to move away from the top pole 52a, and urging the pintle 38 toward a closed position in engagement with its valve seat 72.

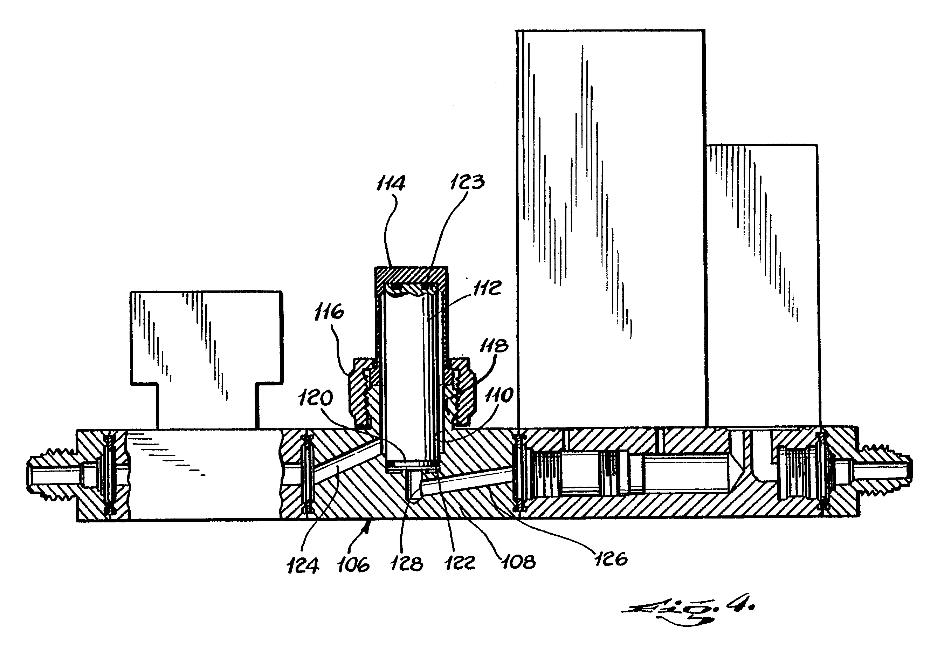

As seen in FIGS. 1 and 4-6, use of the face or bead seals makes it possible to connect various modular components of a mass flow control system in fluid tight relation without any need for the prior art multiplicity of gland/nut type of connections. Such modular components include valves, filters shutoff valves and other components commonly used in a mass flow control system. Their function and construction are not pertinent here and are omitted for brevity. They are constructed to each include a central gas passage, end faces arranged in abutting relation, and fastener openings, as will be seen, enabling their connection in longitudinally aligned, end-to-end relation. FIG. 4 illustrates typical components assigned the reference numerals 98, 100, 102 and 12.

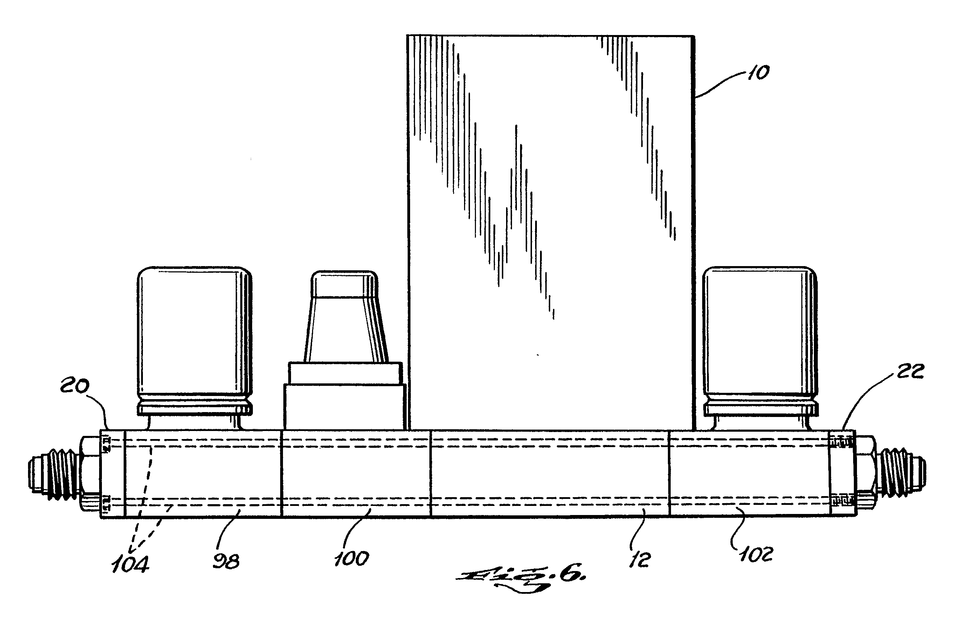

The abutting end face of each of the modular components includes an annular protuberance or rib, as previously described in conjunction with the bead seals of the valve assembly 25, and as illustrated in detail at 94 in FIG. 5. It operates in conjunction with a bead seal washer 96.

The components are assembled with the complemental ribs 94 brought into forcible engagement with the washers 96 by a plurality of headed fasteners or bolts 104. As seen in FIG. 6, the bolts 104 extend through suitable longitudinally extending openings provided in the modular components. In one arrangement the heads of the bolt heads are received within suitable recesses provided in the left end plate 20, and the opposite, threaded ends of the bolts 104 are threaded into threaded openings provided in the right end plate 22. Whether or not the bolts extend all the way through the components is not critical, an alternative arrangement being to provided threaded openings in the opposite ends of the gas block 12, and thread the ends of shorter bolts 104 in those openings. Also, a combination of long and short bolts 104 can be used together, simply offsetting the elongated openings for the respective bolts so there is adequate clearance. This alleviates the disassembly procedure when, for example, the component 100 is to be removed. In that case the bolts 104 on the opposite end of the gas block 12 need not be disturbed.

The foregoing use of through bolts and face seals enables modular components to be coupled together in an inline, longitudinally oriented fashion, with a very significant reduction in the length and bulk of the interconnected components, and in the quantity of seals necessary in the gland/nut type of connection common in the prior art.

It will be apparent from the foregoing that any fluid flow control modular component can be assembled in the manner described, so long as each includes the standardized bead seal ribs described above. Such an assembly can easily be taken apart due to its zero clearance design to substitute or replace any of the components simply by removing the bolts 104 and then reorienting the bolts through the modified assembly. As previously indicated, other forms of face seal may be used if desired, such as elastomeric or metal O-rings or the like, if the conditions of operation permit or require it.

As best seen in FIG. 4, the present mass flow control system also includes a unique filter assembly 106 having a base 108 connected in a standard in-line, longitudinally oriented manner, and using face or bead seals such as those just described. However, the base 108 is characterized by a laterally oriented annular filter cavity 110 defined between the base and a filter 112. A filter cap 114 also defines part of the filter cavity, and it is secured in fluid tight sealing relation relative to the base 108 by threading a nut 116 over it and onto a threaded boss 118 which forms a part of the base 108. This brings a flange of the nut 116 against a complemental flange of the cap 114.

The base of the filter cavity 110 includes a reduced diameter portion 120 which receives a sealing means or O-ring 122 to seal off the base of the filter cavity. A similar sealing means or O-ring 123 is carried at the top of the filter to seal off the top of the annular filter cavity.

The base 108 includes an inlet gas passage 124 which opens into the filter cavity 110, and an outlet passage 126 in communication with the hollow center of the filter. With this arrangement gas flowing from the inlet passage 124 passes into the annular filter cavity 110, then through the wall of the filter, and then downwardly into a bore 128 in communication with the outlet passage 126.

The lateral orientation of the components defining the filter cavity enables the filter 112 to be quickly and easily replaced simply by unscrewing the nut 116 and removing the cap 114. The filter can be laterally withdrawn from the cavity and replaced. None of this requires any disassembly of the filter module or assembly 106 from the adjacent modular components.

From the foregoing it will be apparent that the present fluid mass flow control system is adapted to provide a very effective fluid tight seal at elevated pressures or under high vacuums. In addition, the valve assembly can be quickly reconfigured to operate in either a normally open or a normally closed state. Also, the valve assembly can be sub-assembled and tested separately of the remainder of mass flow controller. It can then be assembled to the remaining components. Heretofore, it was common to test the valve assembly only as part of the complete assembly. If there was any malfunction the complete assembly had to be taken apart to replace or adjust the valve components.

The filter assembly enables easy filter replacement without any need for disassembly of the filter assembly from the adjacent modular components.

The bead seals also uniquely enable the various components of the mass flow control system to be connected together quickly and easily in a compact gas tight assembly.

Various modifications and changes may be made with regard to the foregoing detailed description without departing from the spirit of the invention.

Furthermore, the features disclosed in the foregoing description, in the following claims and/or in the accompanying drawings may, both separately and in any combination thereof, be material for realising the invention in diverse forms thereof.

## Claims

1. A fluid flow control system comprising:
passage means defining gas passages having an inlet port and an outlet port;
a valve assembly having a recess in fluid communication with one of the inlet and outlet ports, a valve seat having an axial passage in fluid communication with the other of the inlet and outlet ports, and a valve having a seating face configured to engage the valve seat;
valve actuation means coupled to the valve for moving the valve axially relative to the valve seat to control fluid flow through the passage means;
a face seal between the valve assembly and the passage means; and
fastener means for urging the valve assembly and passage means together to establish a fluid tight seal at the face seal.

2. A fluid flow control system according to claim 1 wherein the valve is movable laterally into centered relation with the valve seat to align the valve with the valve seat passage, and wherein the valve assembly includes a valve mount fixedly mounting the valve, the valve mount having laterally directed edge portions which are laterally movable in the recess in an unconstrained state, wherein the valve assembly further includes a holder operable in the recess upon alignment of the valve to forcibly engage and constrain the valve mount edge portions against lateral movement to maintain the alignment.

3. A fluid flow control system according to claim 2 wherein the valve mount comprises a circular, axially deflectable disk spring.

4. A fluid flow control system according to claim 1 and including a solenoid assembly having a plunger actuable upon the valve assembly to axially move the valve, and bias means operative upon the plunger to bias the plunger away from the valve seat for moving the valve away from the valve seat.

5. A fluid flow control system comprising:
passage means defining gas passages having an inlet port and an outlet port;
a valve assembly having a recess in fluid communication with one of the inlet and outlet ports, a holder mounted in the recess and having a valve seat opening, a valve seat having an axial passage in fluid communication with the other of the inlet and outlet ports and adapted to be axially adjustably received within the valve seat opening, an axially movable valve adapted to cooperate with the valve seat to adjust the flow of fluid through the valve seat passage, the extent of axial valve travel being determined by the axially adjusted position of the valve seat in the valve seat opening of the holder; and
valve actuation means coupled to the valve for axially moving the valve relative to the valve seat.

6 A fluid flow control system according to claim 5 and including locking means received in the valve seat opening adjacent the valve seat and engageable with the valve seat to fix the valve seat in an axially adjusted position.

7. A fluid flow control system comprising:
passage means defining gas passages having an inlet port and an outlet port;
a valve assembly having a recess in fluid communication with one of the inlet and outlet ports, a valve seat having an axial passage in fluid communication with the other of the inlet and outlet ports, an axially movable valve adapted to cooperate with the valve seat to adjust the flow of fluid through the valve seat passage; and
a solenoid assembly having a plunger actuable upon the valve assembly to axially move the valve in one direction, and bias means operative upon the plunger to bias the plunger in the opposite direction.

8. A fluid flow control system comprising:
passage means defining gas passages having an inlet port and an outlet port;
a valve assembly having a recess in fluid communication with one of the inlet and outlet ports, a valve seat having an axial passage in fluid communication with the other of the inlet and outlet ports, an axially movable valve adapted to cooperate with the valve seat to adjust the flow of fluid through the valve seat passage;

a solenoid assembly having a plunger actuable upon the valve assembly to axially move the valve relative to the valve seat;

a first face seal between the valve assembly and the passage means;

a second face seal between the solenoid assembly and the passage means; and

fastener means for urging the valve and solenoid assemblies against the passage means to establish a fluid tight seal at each face seal.

9. a fluid flow control system comprising:

passage means defining gas passages and having end faces which include inlet and outlet ports, respectively, in communication with the passages;

a valve assembly having a recess in fluid communication with one of the inlet and outlet ports, a valve seat having an axial passage in fluid communication with the other of the inlet and outlet ports, an axially movable valve adapted to cooperate with the valve seat to adjust the flow of fluid through the valve seat passage;

a valve actuating assembly having a plunger actuable upon the valve assembly to axially move the valve relative to the valve seat;

a plurality of modular components having end faces which each include a gas passage opening;

a plurality of face seal means located between the adjacent end faces of the passage means and the modular components, respectively, in surrounding relation to the associated inlet and outlet ports and gas passage openings, respectively; and

fastener means for urging the passage means and modular components together to establish a fluid tight seal at the face seal means.

10. A fluid flow control system according to claim 9 wherein one of the modular components is a filter assembly, the filter assembly comprising: a base having end faces including, respectively, a pair of gas passage openings, the base further having a laterally oriented filter cavity in fluid communication at its inner extremity with one of the pair of gas passage openings; a filter cap attached to the base and defining a lateral continuation of the filter cavity; and a filter disposed in the filter cavity and defining an annular space with the adjacent base and filter cap in fluid communication with the other of the pair of gas passage openings, the filter cap being detachable from the base to enable lateral removal of the filter.

Fig. 1.

22
36
10
46
48
38
42
44
25
40
18
26
24
12
30
34
32
28
14
28
29
27
30
16
20

Fig. 2.

Fig. 3.

42

46

52a

60

56a

54

58

38

92

72

Fig.3.

Fig. 4.

EP 0 392 072 A1

EP 0 392 072 A1

_Fig.6._

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,X | US-A-4569504 (MICHAEL J. DOYLE)<br>* the whole document * | 1 | G05D7/00 |
| D,Y | | 2-10 | |
| P,Y | EP-A-319618 (SULE AKOS)<br>* abstract *<br>* page 8, column 14, line 34 - page 9, column 16, line 23; figures 13, 15, 16 * | 2-10 | |
| A | US-A-4687020 (JAMES H. DOYLE)<br>* the whole document * | 1-10 | |
| A | DE-A-3529134 (DAVID ANTON)<br>* the whole document * | 1-10 | |
| A | DE-A-2758638 (ALFRED TEVES)<br>* the whole document * | 1-10 | |

**TECHNICAL FIELDS SEARCHED (Int. Cl.5 )**

G05D
H01F
F16K

The present search report has been drawn up for all claims

| Place of search | Date of completion of the search | Examiner |
|---|---|---|
| THE HAGUE | 09 AUGUST 1990 | SCHOBERT D.A.V. |